# EUROPEAN PATENT SPECIFICATION

(11) **EP 4 449 081 B1**
(45) Date of publication and mention of the grant of the patent: **25.11.2026**
(21) Application number: 22846955.7
(22) Date of filing: 14.12.2022
(51) Int. Cl.: G01L 5/102, E21B 17/01, G01L 5/108, B63B 21/00

(54) **A CHAIN LOAD MONITORING UNIT, AND AN INSTALLATION TOOL AND A METHOD FOR INSTALLING A CHAIN LOAD MONITORING UNIT**
KETTENLASTÜBERWACHUNGSEINHEIT UND INSTALLATIONSWERKZEUG UND VERFAHREN ZUR INSTALLATION EINER KETTENLASTÜBERWACHUNGSEINHEIT
UNITÉ DE SURVEILLANCE DE CHARGE DE CHAÎNE ET OUTIL D'INSTALLATION ET PROCÉDÉ D'INSTALLATION D'UNE UNITÉ DE SURVEILLANCE DE CHARGE DE CHAÎNE

(30) Priority: 17.12.2021 NO 20211537
(43) Date of publication of application: 23.10.2024
(73) Proprietor: Kongsberg Maritime AS, 3616 Kongsberg (NO)
(72) Inventor: EILERTSEN, Lasse, 3022 Drammen (NO); LERVIK, Arnstein, 6487 Harøy (NO); HOPLAND, Morten, 6487 Harøy (NO)
(74) Representative: Acapo Onsagers AS
(86) International application number: PCT/NO2022/050308
(87) International publication number: WO 2023/113611

(56) References cited:
- EP-B1- 0 380 553
- WO-A1-2013/095299
- DE-A1- 2 755 428
- GB-A- 2 595 628
- US-A1- 2017 089 781

## Description

### Field of the invention

The present invention relates to a chain load monitoring unit, an installation tool and a method for installing a chain load monitoring unit. The present invention also relates to a hybrid riser system, comprising a submerged riser, with a chain load monitoring unit.

### Background of the invention

The present invention aims to make a retrofit system for load monitoring on chainbased hybrid riser system. It is a known problem that the integrated load monitoring systems originally installed in the riser tower fail and that the operators lack information on the integrity of the riser tower buoyancy tank. Worst case scenario is leak in one or more of the compartments in the tank leading to loss off uplift.

To check for leaks, a costly operation is performed using scanning methods that provide very uncertain results. It is possible to detect leaks but not water level in compartments.

Several retrofit systems for load monitoring exist in the market today, all these systems are strain based in some way and as such will only capture changes not the true/absolute load.

### Disclosure of the state of art

WO2009011595 A1 disclose a method for measuring the tensile force in a studless chain, such as an anchor chain for a floating offshore structure, wherein a link of the chain is held securely in a chain stopper in a jack winch while a chain link above is lowered by means of the lifting device of the jack winch so that an opening is created between the upper bend of the link held securely and the lower bend of the link above. Next, a load measuring device comprising a compression load cell is inserted into the opening, whereupon the lifting device tensions the chain so that the force measuring device is jammed in place between said bends and takes up the entire tensile force during further raising of the lifting device.

JP2015051748 A relates to a mooring chain used for mooring offshore floating structures such as offshore wind power generation ships at a predetermined position, and more particularly to a mooring chain having a function of measuring the tension of a mooring chain and the mooring chain.

WO13095299 A1 discloses a chain stopper assembly for a turret mooring system configured for real-time measuring of the tension in a mooring chain, a method for real-time measuring of the tension in the mooring chain, and a method for in situ changing of the load cell in the chain stopper assembly. The chain stopper assembly comprising a chain stopper body; a mounting bracket for supporting the chain stopper body from opposing sides of the chain stopper body via respective saddle blocks coupling the chain stopper body to the mounting bracket; and at least one load cell securing at least one of the saddle blocks to the mounting bracket, for measuring the load between the saddle block and the mounting plate as a measure of the tension in the mooring chain.

GB 2411483 A discloses a device for measuring the tension in a chain that has sections which are pinned together with the device surrounding links of the chain. Adjustment of the device is by turnbuckles. Hydraulic rams are used to pull the links towards one another and so measure chain tension. The rams may be pressurised by a hand pump and a gauge used to measure the pressure. Turnbuckles may be used in place of the rams.

US 2017/0089781A1 discloses a device to monitor the traction on an anchoring line of a floating platform for oil exploration or production at sea, which is mounted at a point on the anchoring line without it becoming an integral part thereof, which basically comprises: an upper bar and a lower bar, which are interconnected at one end by a hydraulic cylinder and on the other end by a solid vertical bar.

GB 1426965 A discloses a haulage chain tension measuring device, and that provides a device for measuring the tension of a haulage chain for a coal face mining machine.

Further, EP0380553A1 discloses a device for measuring tension forces in chains and DE2755428A1 discloses an interchangeable overload indicator for load chains consisting of two pawls enclosing a chain connected by calibrated shear pins.

### Objects of the present invention

It is an object of the invention to provide a chain load monitoring unit, an installation tool and a method for installing a chain load monitoring unit, wherein absolute load values can be determined, i.e. monitoring the tension in the chain.

A further object of the present invention is to provide a hybrid riser system, comprising a submerged riser, with a chain load monitoring unit, that can give absolute uplift values that again is a direct indication on the integrity of the riser tower buoyancy tank and if there is intrusion of water in the riser system.

The invention can be online using acoustic units connected to a vessel mounted system, for instance a HIPAP system (HiPAP = High Precision Acoustic Positioning system). The invention can enable tracking of tank state and can provide early warning if there is a developing problem.

The invention may further reduce the yearly cost for inspection. It is anticipated that this will reduce maintenance cost significantly for fields with hybrid riser systems.

The chain load monitoring unit according to the invention can "take over the load" from the chain and measure the absolute load value.

The invention can be retrofit on existing systems.

The invention can be installed in hybrid riser systems with chains and buoyancy tanks. It may also be installed in any permanently moored unit with chain upper sections. The invention can also be used in mooring chain monitoring also for new deliveries, further it could support related concepts including offshore floating wind, fish-farms etc.

### Summary of the invention

According to a first aspect of the invention, a chain load monitoring unit is provided, comprising a main body with a first locking pawl and a second locking pawl connected by respective shafts, said first locking pawl and second locking pawl are each arranged to receive and hold respective chain links of a chain and to transfer the load on the chain to the shafts. Respective shafts comprise attachable locking clamps, which when attached to the shafts locks the first locking pawl and the second locking pawl at a distance between each other, wherein the locking pawls takes up the load from the chain, and wherein at least one of said shafts comprises a load cell connected to a logger unit, said load cell is arranged to read tension in the tensioned shaft taking up the load. The locking clamps are attachable between the second locking pawl and a first clamp support at a lower part of the shaft, and the first locking pawl is fixedly connected to the shafts and the second locking pawl is slidably mounted on the shafts.

The load cell can be mounted on the shaft and be placed on a load cell support above the upper locking pawl.

Further, an upper fastener for load cell load transfer can be placed on the shaft and above the load cell.

The load cell can in an alternative embodiment be integrated in the shaft(s).

The locking clamps can be attachable below the lower locking pawl.

A lower part of each shaft may comprise a first clamp support and a second tool support, said first clamp support and second tool support being spaced apart to provide a circumferential slot for accommodating a part of an installation tool.

Further, the logger unit can comprise an acoustic modem for transfer of data.

The chain load monitoring unit may also comprise a battery pack for the load cell(s) and the logger unit.

According to a second aspect of the invention, an installation tool for installing a chain load monitoring unit on a chain is provided, comprising a support frame supporting a main body of the chain load monitoring unit, and the support frame comprises hydraulic cylinders for placement below a second locking pawl of the chain load monitoring unit, wherein said hydraulic cylinders, when activated, are arranged to force the second locking pawl upwards, allowing attachment of a locking clamp on each shaft preventing downward movement of the second locking pawl.

The support frame of the installation tool can comprise one or more activatable support clips holding the locking clamps, prior to attachment on the shafts.

The hydraulic cylinders can be mounted on a lower support plate of the support frame, said support plate having two U-shaped cavities being accommodatable in a circumferential slot at a lower part of each shaft of the chain load monitoring unit, when the installation tool and the chain load monitoring unit are mounted together.

Each support clip can be placed above the support plate.

The installation tool is preferably detachable from the chain load monitoring unit.

An upper part of the support frame can be arranged to abut the first locking pawl. The installation tool can comprise a counterweight, said counterweight is pivotably mounted to and extending from the support frame, and is a counterweight to the chain load monitoring unit when mounted in the installation tool.

According to a third aspect of the invention, a method for installing a chain load monitoring unit on a chain using an installation tool is provided, comprising the steps:
- mounting the chain load monitoring unit in an installation tool,
- lowering the installation tool with the chain load monitoring unit into the sea and close to the chain,
- attaching the installation tool and the chain load monitoring unit onto the chain, wherein a first locking pawl and a second locking pawl of the chain load monitoring unit receives and holds respective chain links of the chain,
- activation of the installation tool to force the second locking pawl of the chain load monitoring unit upwards,
- attaching locking clamps on each shaft of the chain load monitoring unit below the second locking pawl, preventing downward movement of the second locking pawl,
- deactivation of the installation tool from forcing the second locking pawl upwards, and
- removal of the installation tool from the chain load monitoring unit.

Activation and deactivation of the installation tool may comprise activation and deactivation of hydraulic cylinders mounted on the installation tool.

The locking clamps can be attached between the second locking pawl and a first clamp support on a lower part of each shaft of the chain load monitoring unit.

The locking clamps may further be transferred from the installation tool to the chain load monitoring unit, in that the locking clamps are connected to a respective activatable support clip holding the locking clamps, prior to the attachment on the shafts.

According to a fourth aspect of the invention, a hybrid riser system is provided, comprising a submerged riser, which in an upper part is connected to a tether chain, said tether chain is running up to a buoyancy tank floating below a water surface, wherein a chain load monitoring unit is mounted in the tether chain to take up the load from the chain and to monitor the load in real time.

Tension data read in the chain load monitoring unit can be transferred to a top side load monitoring system.

### Description of the figures

Embodiments of the present invention will now be described, by way of example only, with reference to the following figures, wherein:
Figures 1-3 show a chain load monitoring unit.
Figure 4 shows the chain load monitoring unit with a chain.
Figures 5 and 6 show the chain load monitoring unit mounted in an installation tool.
Figures 7 and 8 show the installation tool without the chain load monitoring unit.
Figures 9a-9f show an installation procedure of the chain load monitoring unit on a chain, using the installation tool.
Figure 10 shows a hybrid riser system with the chain load monitoring unit.
Figure 11 shows the chain load monitoring unit connected to a tether chain of a buoyancy tank.

### Description of preferred embodiments of the invention

In the context of the present invention and for the purpose of illustrating the invention, use of relative terms such as upper, lower, below, above etc. all refer to the chain load monitoring unit being in an upright position and/or mounted on a vertically extending chain. The relative terms are thus used to define, describe and exemplify the features of the invention It is to be understood that the chain load monitoring unit may of course also have other orientations depending on the chain extension.

The chain load monitoring unit according to the present invention may also be referred to as a chain tension monitoring unit or a load monitoring chain stopper tension unit.

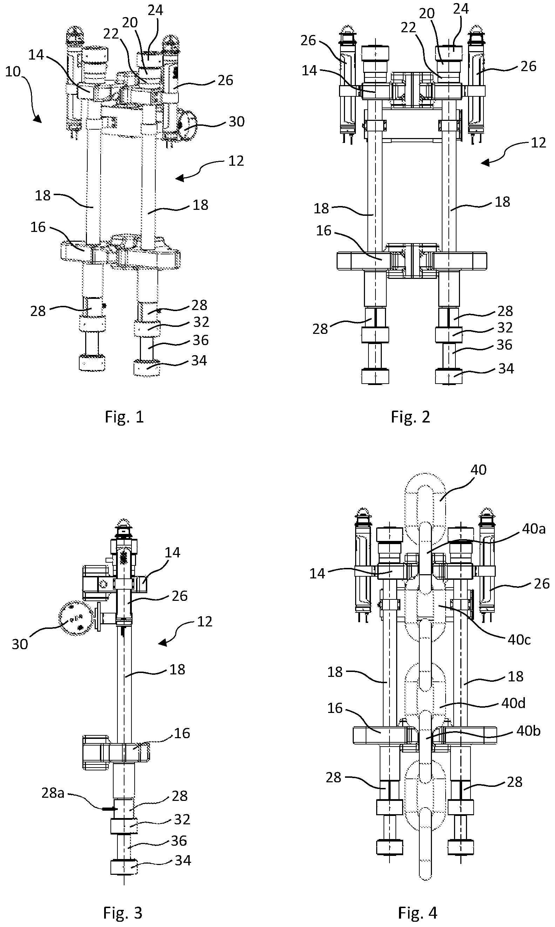

A chain load monitoring unit 10, as shown in figures 1-3 and 4 shall first be disclosed. The chain load monitoring unit 10 is mainly intended for use subsea and to, in addition to monitor load or tension in a chain, also to work as a chain stopper.

The chain load monitoring unit 10 according to the first aspect of the invention comprises a main body 12 with a first locking pawl 14, being an upper locking pawl 14 as shown in the figures, and second locking pawl 16, being a lower locking pawl 16 as shown in the figures, connected to each other by respective shafts 18. The upper locking pawl 14 and the lower locking pawl 16 are arranged to receive and hold respective chain links of a chain 40 and to transfer the load on the chain 40 to the shafts 18. The upper locking pawl 14 and the lower locking pawl 16 each comprise a partly open aperture or slot designed to receive and accommodate a respective chain link 40a,40b, and thereby abutting neighboring chain links 40c,40d, to take up the load of the chain 40. The chain 40 can for instance be a chain in a hybrid riser system with chains and buoyancy tanks, or a chain in a moored unit with chain upper sections.

For receiving and locking respective chain links 40a,40b of the chain 40, the upper locking pawl 14 and the lower locking pawl 16 are each preferably equipped with a U-shaped slot or cavity accommodating each chain link 40a,40b. As seen in fig. 4 the upper locking pawl 14 accommodates the chain link 40a and abuts on its underside the neighboring chain link 40c and the lower locking pawl 16 accommodates the chain link 40b and abuts on its upper side the neighboring chain link 40d.

Respective shafts 18 of the chain load monitoring unit 10 comprise attachable, and possibly detachable, locking clamps 28, which when attached to the shafts 18 locks the upper locking pawl 14 and the lower locking pawl 16 at a load transferring distance between each other. Each locking clamp 28 is equipped with a handle 28a. Fig. 1-3 shows the locking clamps 28 attached on the shafts 18, however, the locking clamps 28 are normally attached and installed after the chain 40 has been received in the chain load monitoring unit 10, as shall be explained later. By "a load transferring distance between each other" is meant a distance between the upper locking pawl 14 and the lower locking pawl 16 wherein the locking pawls 14,16 takes up the load from the chain 40, i.e. the chain 40 between the chain links 40a,40b is not taking up any load. Fig. 4 shows that the chain 40 is accommodated in the chain load monitoring unit 10 between the upper locking pawl 14 and the lower locking pawl 16 and that it is not loaded or tensioned.

The chain load monitoring unit 10 further comprises that at least one of said shafts 18 is equipped with or connected to a load cell 20 that is further connected to a logger unit 26 attached to the main body 12. The load cell(s) 20 is/are provided to read load or tension in the tensioned shaft(s) 18 taking up the load from the chain 40. The logger unit 26 comprises or is connected to one or more transponders, such as cNODE. cNODE is a series of transponders for underwater acoustic positioning and data link, and can be used with HiPAP underwater positioning systems.

As shown in the figures, the load cell 20 is for instance mounted on the shaft 18 and is placed on a load cell support 22 above the upper locking pawl 14. Further, an upper fastener 24 for load cell load transfer is placed on the shaft 18 and above the load cell 20.

However, in an alternative embodiment (not shown) the load cell(s) 20 can be integrated in the shaft 18.

The logger unit 26 can for practical reasons be located close to the load cell(s) 20, for instance on the shaft 18, or the each of the shafts 18 in case two load cells 20 are used. For transfer of data, the logger unit 26 may comprise an acoustic modem, such as cNODE, which can transfer data through the water and up to a vessel or an installation at the surface. Further, the chain load monitoring unit 10 preferably comprises a battery pack 30 providing power to the load cell(s) 20 and the logger unit 26. The battery pack 30 can be a quad battery pack.

The upper locking pawl 14 is normally fixedly connected to the shafts 18 and the lower locking pawl 16 is slidably mounted on the shafts 18. This is the most practical arrangement, but it is conceivable that the arrangement is the other way around, i.e. the upper locking pawl 14 is slidably mounted on the shafts 18 and the lower locking pawl 16 is fixedly connected to the shafts 18. Hence, the terms "upper" and "lower" must be understood as seen in the drawings. The locking clamps 28 are attachable and installed below the lower locking pawl 16 in order to lock the upper locking pawl 14 and the lower locking pawl 16 at said load transferring distance between each other, after the lower locking pawl 16 has been sufficiently pushed toward the upper locking pawl 14.

The locking clamps 28 are for instance installed between the lower locking pawl 16 and a first clamp support 32 at a lower part of the shaft 18. The lower part of the shaft 18 comprises in addition to the first clamp support 32, a second tool support 34 providing a circumferential slot 36 for accommodating a part of an installation tool 50.

The installation tool 50 according to the second aspect of the invention, for installing the chain load monitoring unit 10 previously disclosed, shall now be described. After installation of the chain load monitoring unit 10 on the chain 40, the installation tool 50 is retrieved to the surface.

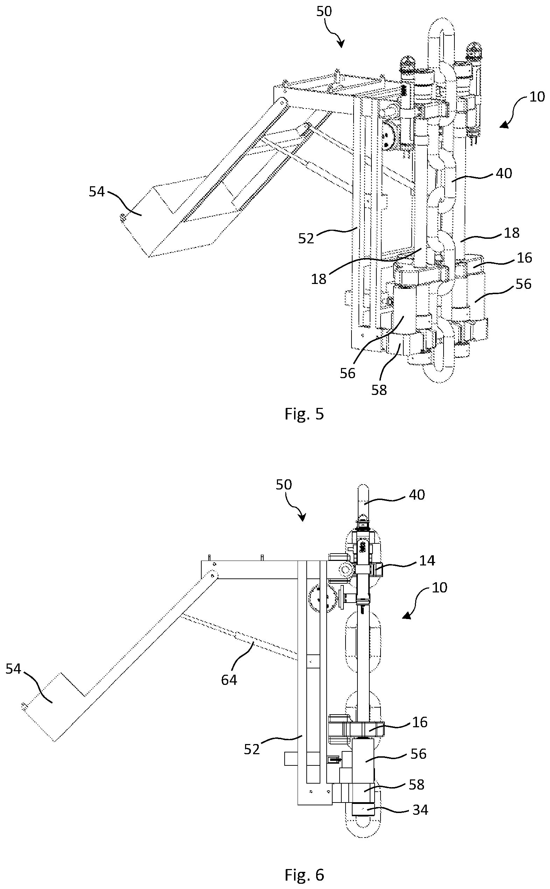

The installation tool 50 comprises a support frame 52 supporting the main body 12 of the chain load monitoring unit 10 in an upright position, as illustrative shown in for instance figure 5 and 6. The shafts 18 are resting in a lower part of the support frame 52, and an upper part of the support frame 52 is arranged to abut and support the upper locking pawl 14 of the chain load monitoring unit 10.

The support frame 52 comprises several hydraulic cylinders 56 for placement below the lower locking pawl 16 of the chain load monitoring unit 10, such that the lower locking pawl 16 is resting on a respective hydraulic cylinder 56. Two hydraulic cylinders 56 are preferably used. The hydraulic cylinders 56 are when activated arranged to force the lower locking pawl 16 upwards, toward the upper locking pawl 14, allowing attachment of the locking clamp 28 on each shaft 18, thus preventing downward movement of the lower locking pawl 16. The chain 40 is thus accommodated in the chain load monitoring unit 10 between the upper locking pawl 14 and the lower locking pawl 16, without being loaded or tensioned, in a load transferring distance between each other.

The hydraulic cylinders 56 can be pre-pressurized prior to launching of the installation tool 50 from the vessel, or they can be mechanically pressurized prior to being used.

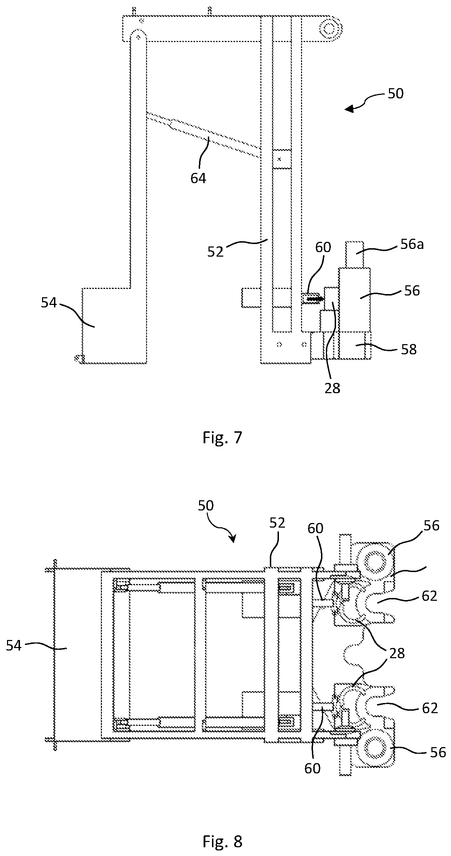

The support frame 52 of the installation tool 50 comprises preferable two support clips 60 (figure 7) holding each locking clamp 28, prior to be placed on the shafts 18.

The support clips 60 grips the handle 28a of a respective locking clamp 28. Each support clip 60 can be activated to force the locking clamps 28 onto the shafts 18. The activation of each support clip 60 can be passive in that the support clip is pre-pressurized and automatically released, or the activation of each support clip 60 can be active in that the support clip is controlled and actively is pressurized. As seen in figure 8 the support clip 60 is holding two locking clamps 28 in an open state prior to the being placed on the shafts 18. The locking clamps 28 will after attachment to the shafts 18 at least partly surround the shafts.

The hydraulic cylinders 56 are mounted on a lower support plate 58 of the support frame 52, and each hydraulic cylinder 56 has an upward facing piston rod 56a. The support plate 58 has a U-shaped cavity 62 for each shaft 18, wherein the U-shaped cavity 62 is accommodated in the circumferential slot 36 at the lower part of the shaft 18 when the installation tool 50 and the chain load monitoring unit 10 are mounted together. Each support clip 60 is placed above the support plate 58.

The installation tool 50 may further comprise a counterweight 54. The counterweight 54 is pivotably mounted to and extending from the support frame 52 and is a counterweight to the chain load monitoring unit 10 when mounted in the installation tool 50. The counterweight 54 can be moved in and out from the support frame 52 by one to two cylinders 64 and be pivotably connected to a top plate of the support frame 52.

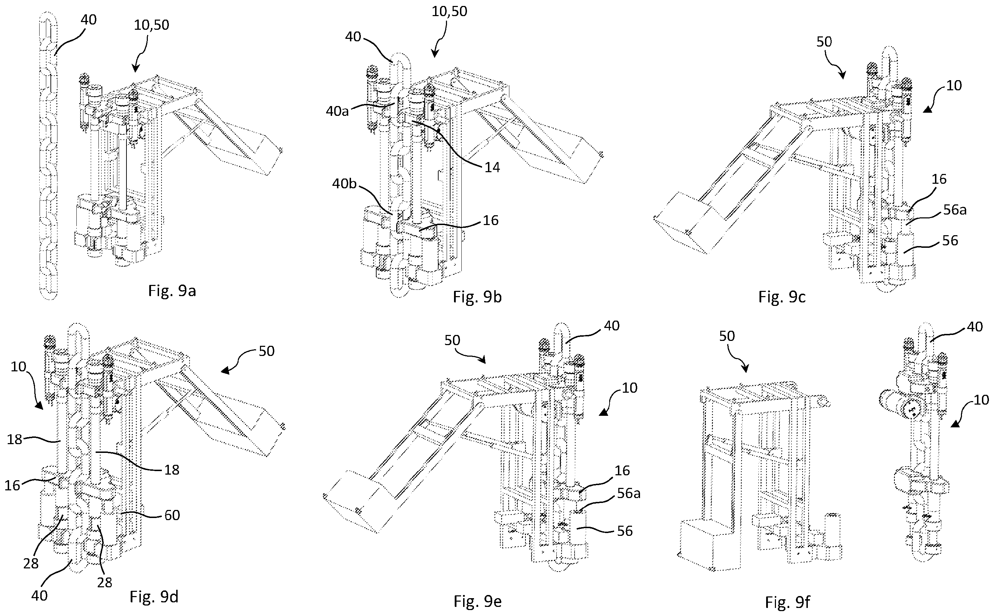

Figures 9a-9f show an installation procedure of the chain load monitoring unit 10 on a chain 40, using the installation tool 50. The method starts by mounting of the chain load monitoring unit 10 in the installation tool 50, as indicated in fig. 9a. This is done topside, for instance on the vessel. Then the installation tool 50 with the chain load monitoring unit 10 is lowered into the sea and close to the chain 40, for instance using hoisting equipment like a heave compensated crane or winch, and the installation tool 50 and the chain load monitoring unit 10 is connected onto the chain 40, as seen in fig. 9b. The upper locking pawl 14 and the lower locking pawl 16 of the chain load monitoring unit 10 now receives and holds respective chain links of the chain 40.

In fig. 9c the installation tool 50 is activated to force the lower locking pawl 16 of the chain load monitoring unit 10 upwards, by extending the piston rods 56a of the hydraulic cylinders 56. In fig. 9d the support clips 60 are activated to force the locking clamps 28 onto each shaft 18 of the chain load monitoring unit 10 below the lower locking pawl 16, thus preventing downward movement of the lower locking pawl 16. The load from the chain 40 is now transferred to the shafts 18 of the chain load monitoring unit 10.

In fig. 9e the installation tool 50 is deactivated from forcing the lower locking pawl 16 upwards by retracting the piston rods 56a of the hydraulic cylinders 56, and in fig, 9f the installation tool 50 is removed from the chain load monitoring unit 10 and is retrieved to the surface.

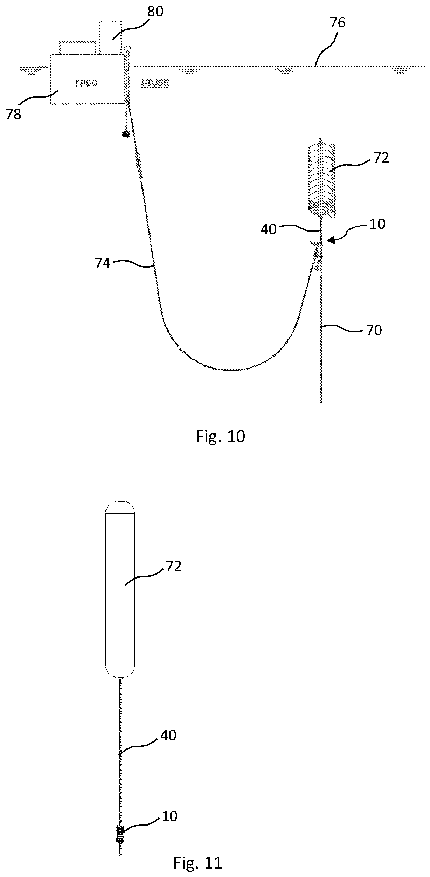

The chain load monitoring unit 10 can be used in a hybrid riser system, as shown in figure 10, with for instance a FPSO 78 (Floating Production Storage and Offloading) and FSO (Floating Storage and Offloading). A hybrid riser system is shown in figure 10 and comprises the FPSO 78 with a flexible jumper 74 connected to a submerged riser 70, which in an upper part is connected to a tether chain 40 running up to a buoyancy tank 72 floating below a water surface 76. A chain load monitoring unit 10 as previously disclosed is, as indicated, mounted on the tether chain 40 below the buoyancy tank 72, to take up the load from the chain 40 and to monitor the load in real time. Tension data read in the chain load monitoring unit 10 is transferred to a top side load monitoring system 80 on the FPSO 78, for instance by using the acoustic modem on the chain load monitoring unit 10. The acoustic modem on the chain load monitoring unit 10 can for instance be communicating with a transducer deployment system having a µPAP transducer. µPAP is a small and compact acoustic positioning system for operation from a surface vessel to track ROV's, tow fish, divers and any other subsea target at ranges to several thousand meters.

Figure 11 shows the chain load monitoring unit 10 connected to a tether chain 40 of a buoyancy tank 72.

The chain load monitoring unit 10 and the installation tool 50 can be rather large units. For instance, in a preliminary design with a working load of less than 300 tons in the chain, the weight of the chain load monitoring unit 10 can be approximately 3 tons and the weight of the installation tool 50 can be approximately 5 tons, giving a lifting weight of the combined units of approximately 8 tons. It is therefore advantageous to a DP operated vessel, for instance LCV - Light Construction Vessel or similar vessel, equipped with a crane and at least a WROV (Working ROV). The crane can if possible be an active heave compensated (AHC) crane in order to stabilize the subsea lifting during installation to the mooring chain and to increase weather criteria during installation.

## Claims

1. A chain load monitoring unit (10), comprising a main body (12) with a first locking pawl (14) and a second locking pawl (16) connected by respective shafts (18), said first locking pawl (14) and second locking pawl (16) are each arranged to receive and hold respective chain links of a chain (40) and to transfer the load on the chain (40) to the shafts (18),
wherein respective shafts (18) comprise attachable locking clamps (28), which when attached to the shafts (18) locks the first locking pawl (14) and the second locking pawl (16) at a distance between each other, wherein the locking pawls (14,16) takes up the load from the chain (40), whereby;
at least one of said shafts (18) comprises a load cell (20) connected to a logger unit (26), said load cell (20) is arranged to read tension in the tensioned shaft (18) taking up the load,
wherein the locking clamps (28) are attachable between the second locking pawl (16) and a first clamp support (32) at a lower part of the shaft (18), and
wherein the first locking pawl (14) is fixedly connected to the shafts (18) and the second locking pawl (16) is slidably mounted on the shafts (18).

2. The chain load monitoring unit (10) according to claim 1, wherein the load cell (20) is mounted on the shaft (18) and is placed on a load cell support (22) above the upper locking pawl (14).

3. The chain load monitoring unit (10) according to claim 2, wherein an upper fastener (24) for load cell load transfer is placed on the shaft (18) and above the load cell (20).

4. The chain load monitoring unit (10) according to claim 1, wherein the load cell (20) is integrated in the shaft (18).

5. The chain load monitoring unit (10) according to claim 1, wherein the logger unit (26) comprises an acoustic modem for transfer of data.

6. The chain load monitoring unit (10) according to claim 1, wherein the chain load monitoring unit (10) comprises a battery pack (30) for the load cell(s) (20) and the logger unit (26).

7. An installation tool (50) for installing a chain load monitoring unit (10) according to any of claims 1-6 on a chain (40),
said installation tool (50) comprises a support frame (52) supporting a main body (12) of the chain load monitoring unit (10), and the support frame (52) comprises hydraulic cylinders (56) for placement below a second locking pawl (16) of the chain load monitoring unit (10),
wherein said hydraulic cylinders (56), when activated, are arranged to force the second locking pawl (16) upwards, allowing attachment of a locking clamp (28) on each shaft (18) preventing downward movement of the second locking pawl (16).

8. The installation tool (50) according to claim 7, wherein the support frame (52) of the installation tool (50) comprises one or more activatable support clips (60) holding the locking clamps (28), prior to attachment on the shafts (18).

9. The installation tool (50) according to claim 7, wherein the hydraulic cylinders (56) are mounted on a lower support plate (58) of the support frame (52), said support plate (58) having two U-shaped cavities (62) being accommodatable in a circumferential slot (36) at a lower part of each shaft (18) of the chain load monitoring unit (10), when the installation tool (50) and the chain load monitoring unit (10) are mounted together.

10. The installation tool (50) according to claim 8 and 9, wherein each support clip (60) is placed above the support plate (58).

11. The installation tool (50) according to claim 7, wherein the installation tool (50) is detachable from the chain load monitoring unit (10).

12. The installation tool (50) according to claim 7, wherein an upper part of the support frame (52) is arranged to abut the first locking pawl (14).

13. The installation tool (50) according to claim 7, comprising a counterweight (54), said counterweight (54) is pivotably mounted to and extending from the support frame (52), and is a counterweight to the chain load monitoring unit (10) when mounted in the installation tool (50).

14. A method for installing a chain load monitoring unit (10) according to any of claims 1-6 on a chain (40) using an installation tool (50) according to any of claims 7 to 13, comprising the steps:
- mounting the chain load monitoring unit (10) in an installation tool (50),
- lowering the installation tool (50) with the chain load monitoring unit (10) into the sea and close to the chain (40),
- attaching the installation tool (50) and the chain load monitoring unit (10) onto the chain (40), wherein a first locking pawl (14) and a second locking pawl (16) of the chain load monitoring unit (10) receives and holds respective chain links of the chain (40),
- activation of the installation tool (50) to force the second locking pawl (16) of the chain load monitoring unit (10 upwards,
- attaching locking clamps (28) on each shaft (18) of the load monitoring chain stopper tension unit (10) below the second locking pawl (16), preventing downward movement of the second locking pawl (16),
- deactivation of the installation tool (50) from forcing the second locking pawl (16) upwards, and
- removal of the installation tool (50) from the chain load monitoring unit (10).

15. The method according to claim 14, wherein activation and deactivation of the installation tool (50) comprises activation and deactivation of hydraulic cylinders (56) mounted on the installation tool (50).

16. The method according to claim 14, wherein the locking clamps (28) are attached between the second locking pawl (16) and a first clamp support (32) on a lower part of each shaft (18) of the chain load monitoring unit (10).

17. A hybrid riser system, comprising a submerged riser (70), which in an upper part is connected to a tether chain (40), said tether chain (40) is running up to a buoyancy tank (72) floating below a water surface (76), wherein a chain load monitoring unit (10) according to any of claims 1-6 is mounted in the tether chain (40) to take up the load from the chain (40) and to monitor the load in real time.

18. The hybrid riser system according to claim 17, wherein tension data read in the chain load monitoring unit (10) is transferred to a top side load monitoring system (80).

## Patentansprüche

1. Kettenlastüberwachungseinheit (10), umfassend einen Hauptkörper (12) mit einer ersten Sperrklinke (14) und einer zweiten Sperrklinke (16), die durch jeweilige Wellen (18) verbunden sind, wobei die erste Sperrklinke (14) und die zweite Sperrklinke (16) jeweils dazu eingerichtet sind, jeweilige Kettenglieder einer Kette (40) aufzunehmen und festzuhalten und die Last an der Kette (40) auf die Wellen (18) zu übertragen,
wobei die jeweiligen Wellen (18) anbringbare Feststellbügel (28) umfassen, die, wenn sie an den Wellen (18) angebracht sind, die erste Sperrklinke (14) und die zweite Sperrklinke (16) mit einem Abstand dazwischen feststellen, wobei die Sperrklinken (14, 16) die Last von der Kette (40) aufnehmen, wodurch:
mindestens eine der Wellen (18) eine Lastzelle (20) umfasst, die mit einem Datenaufzeichner (26) verbunden ist, wobei die Lastzelle (20) dazu eingerichtet ist, die Spannung in der gespannten Welle (18), welche die Last aufnimmt, abzulesen,
wobei die Feststellbügel (28) zwischen der zweiten Sperrklinke (16) und einem ersten Klemmenhalter (32) an einem unteren Teil der Welle (18) anbringbar sind, und
wobei die erste Sperrklinke (14) fest mit den Wellen (18) verbunden ist, und die zweite Sperrklinke (16) gleitbeweglich auf den Wellen (18) montiert ist.

2. Kettenlastüberwachungseinheit (10) nach Anspruch 1, wobei die Lastzelle (20) an der Welle (18) montiert ist und auf einem Lastzellenhalter (22) oberhalb der oberen Sperrklinke (14) angeordnet ist.

3. Kettenlastüberwachungseinheit (10) nach Anspruch 2, wobei ein oberes Befestigungselement (24) für eine Lastübertragung der Lastzelle auf der Welle (18) und oberhalb der Lastzelle (20) angeordnet ist.

4. Kettenlastüberwachungseinheit (10) nach Anspruch 1, wobei die Lastzelle (20) in die Welle (18) integriert ist.

5. Kettenlastüberwachungseinheit (10) nach Anspruch 1, wobei der Datenaufzeichner (26) ein akustisches Modem für die Datenübertragung umfasst.

6. Kettenlastüberwachungseinheit (10) nach Anspruch 1, wobei die Kettenlastüberwachungseinheit (10) einen Batteriesatz (30) für die Lastzelle(n) (20) und den Datenaufzeichner (26) umfasst.

7. Installationswerkzeug (50) zum Installieren einer Kettenlastüberwachungseinheit (10) nach einem der Ansprüche 1 bis 6 an einer Kette (40),
wobei das Installationswerkzeug (50) ein Stützgerüst (52) umfasst, das einen Hauptkörper (12) der Kettenlastüberwachungseinheit (10) abstützt, und das Stützgerüst (52) Hydraulikzylinder (56) zur Anordnung unterhalb einer zweiten Sperrklinke (16) der Kettenlastüberwachungseinheit (10) umfasst,
wobei die Hydraulikzylinder (56), wenn sie aktiviert sind, dazu eingerichtet sind, die zweite Sperrklinke (16) nach oben zu treiben, wodurch das Anbringen eines Feststellbügels (28) an jeder Welle (18) ermöglicht wird, das eine Abwärtsbewegung der zweiten Sperrklinke (16) verhindert.

8. Installationswerkzeug (50) nach Anspruch 7, wobei das Stützgerüst (52) des Installationswerkzeugs (50) eine oder mehrere aktivierbare Halteklemmen (60) umfasst, welche die Feststellbügel (28) vor dem Anbringen an den Wellen (18) festhalten.

9. Installationswerkzeug (50) nach Anspruch 7, wobei die Hydraulikzylinder (56) an einer unteren Trägerplatte (58) des Stützgerüsts (52) montiert sind, wobei die Trägerplatte (58) zwei U-förmige Hohlräume (62) aufweist, die in einem Umfangsschlitz (36) an einem unteren Teil jeder Welle (18) der Kettenlastüberwachungseinheit (10) untergebracht sein können, wenn das Installationswerkzeug (50) und die Kettenlastüberwachungseinheit (10) zusammen montiert sind.

10. Installationswerkzeug (50) nach Anspruch 8 und 9, wobei jede Halteklemme (60) oberhalb der Trägerplatte (58) angeordnet ist.

11. Installationswerkzeug (50) nach Anspruch 7, wobei das Installationswerkzeug (50) von der Kettenlastüberwachungseinheit (10) abnehmbar ist.

12. Installationswerkzeug (50) nach Anspruch 7, wobei ein oberer Teil des Stützgerüsts (52) dazu eingerichtet ist, an der ersten Sperrklinke (14) zum Anschlag zu kommen.

13. Installationswerkzeug (50) nach Anspruch 7, umfassend ein Gegengewicht (54), wobei das Gegengewicht (54) an dem Stützgerüst (52) schwenkbar und sich von diesem aus erstreckend montiert ist, und ein Gegengewicht für die Kettenlastüberwachungseinheit (10) ist, wenn sie in dem Installationswerkzeug (50) montiert ist.

14. Verfahren zum Installieren einer Kettenlastüberwachungseinheit (10) nach einem der Ansprüche 1 bis 6 an einer Kette (40) unter Verwendung eines Installationswerkzeugs (50) nach einem der Ansprüche 7 bis 13, umfassend folgende Schritte:
- Montieren der Kettenlastüberwachungseinheit (10) in ein Installationswerkzeug (50),
- Absenken des Installationswerkzeugs (50) mit der Kettenlastüberwachungseinheit (10) ins Meer und in die Nähe der Kette (40),
- Anbringen des Installationswerkzeugs (50) und der Kettenlastüberwachungseinheit (10) an der Kette (40), wobei eine erste Sperrklinke (14) und eine zweite Sperrklinke (16) der Kettenlastüberwachungseinheit (10) jeweilige Kettenglieder der Kette (40) aufnehmen und festhalten,
- Aktivieren des Installationswerkzeugs (50), um die zweite Sperrklinke (16) der Kettenlastüberwachungseinheit (10) nach oben zu treiben,
- Anbringen von Feststellbügels (28) an jeder Welle (18) der Spanneinheit (10) des Kettenstoppers zur Lastüberwachung unterhalb der zweiten Sperrklinke (16), wodurch eine Abwärtsbewegung der zweiten Sperrklinke (16) verhindert wird,
- Deaktivieren des Installationswerkzeugs (50) vom Treiben der zweiten Sperrklinke (16) nach oben, und
- Entfernen des Installationswerkzeugs (50) von der Kettenlastüberwachungseinheit (10).

15. Verfahren nach Anspruch 14, wobei die Aktivierung und die Deaktivierung des Installationswerkzeugs (50) die Aktivierung und die Deaktivierung von Hydraulikzylindern (56), die auf dem Installationswerkzeug (50) montiert sind, umfassen.

16. Verfahren nach Anspruch 14, wobei die Feststellbügel (28) zwischen der zweiten Sperrklinke (16) und einem ersten Klemmenhalter (32) an einem unteren Teil jeder Welle (18) der Kettenlastüberwachungseinheit (10) angebracht sind.

17. Hybrides Riser-System, umfassend einen Unterwasser-Riser (70), der in einem oberen Teil mit einer Verankerungskette (40) verbunden ist, wobei sich die Verankerungskette (40) bis zu einem schwimmenden Reservoir (27), das unterhalb einer Wasseroberfläche schwimmt, erstreckt, wobei eine Kettenlastüberwachungseinheit (10) nach einem der Ansprüche 1 bis 6 in der Verankerungskette (40) montiert ist, um die Last von der Kette (40) aufzunehmen und die Last in Echtzeit zu überwachen.

18. Hybrides Riser-System nach Anspruch 17, wobei die Spannungsdaten, die in der Kettenlastüberwachungseinheit (10) abgelesen werden, auf ein Überwasser-Lastüberwachungssystem (80) übertragen werden.

## Revendications

1. Unité de surveillance de charge de chaîne (10), comprenant un corps principal (12) avec un premier cliquet de verrouillage (14) et un deuxième cliquet de verrouillage (16) connectés par des arbres respectifs (18), ledit premier cliquet de verrouillage (14) et le deuxième cliquet de verrouillage (16) étant chacun agencé pour recevoir et maintenir des maillons de chaîne respectifs d'une chaîne (40) et pour transférer la charge de la chaîne (40) aux arbres (18),
dans laquelle les arbres respectifs (18) comprennent des brides de verrouillage (28), pouvant être attachées qui, lorsqu'elles sont attachées aux arbres (18), verrouillent le premier cliquet de verrouillage (14) et le deuxième cliquet de verrouillage (16) à une distance entre eux, les cliquets de verrouillage (14, 16) absorbant la charge de la chaîne (40), de sorte que :
au moins l'un desdits arbres (18) comprend une cellule de charge (20) connectée à une unité d'enregistrement (26), ladite cellule de charge (20) étant agencée pour relever la tension dans l'arbre tendu (18) absorbant la charge,
dans laquelle les brides de verrouillage (28) peuvent être attachées entre le deuxième cliquet de verrouillage (16) et un premier support de bride (32) à une partie inférieure de l'arbre (18), et
dans laquelle le premier cliquet de verrouillage (14) est connecté de manière fixe aux arbres (18) et le deuxième cliquet de verrouillage (16) est monté de manière coulissante sur les arbres (18).

2. Unité de surveillance de charge de chaîne (10) selon la revendication 1, dans laquelle la cellule de charge (20) est montée sur l'arbre (18) et est placée sur un support de cellule de charge (22) au-dessus du cliquet de verrouillage supérieur (14).

3. Unité de surveillance de charge de chaîne (10) selon la revendication 2, dans laquelle une fixation supérieure (24) pour un transfert de charge de cellule de charge est placée sur l'arbre (18) et au-dessus de la cellule de charge (20).

4. Unité de surveillance de charge de chaîne (10) selon la revendication 1, dans laquelle la cellule de charge (20) est intégrée dans l'arbre (18).

5. Unité de surveillance de charge de chaîne (10) selon la revendication 1, dans laquelle l'unité d'enregistrement (26) comprend un modem acoustique pour le transfert de données.

6. Unité de surveillance de charge de chaîne (10) selon la revendication 1, dans laquelle l'unité de surveillance de charge de chaîne (10) comprend un bloc-batterie (30) pour la ou les cellules de charge (20) et l'unité d'enregistrement (26).

7. Outil d'installation (50) permettant d'installer une unité de surveillance de charge de chaîne (10) selon l'une quelconque des revendications 1 à 6 sur une chaîne (40),
ledit outil d'installation (50) comprenant un cadre porteur (52) supportant un corps principal (12) de l'unité de surveillance de charge de chaîne (10), et le cadre porteur (52) comprenant des vérins hydrauliques (56) à placer au-dessous d'un deuxième cliquet de verrouillage (16) de l'unité de surveillance de charge de chaîne (10),
dans lequel lesdits vérins hydrauliques (56), lorsqu'ils sont activés, sont agencés pour pousser le deuxième cliquet de verrouillage (16) vers le haut, permettant d'attacher une bride de verrouillage (28) à chaque arbre (18) empêchant un mouvement vers le bas du deuxième cliquet de verrouillage (16).

8. Outil d'installation (50) selon la revendication 7, dans lequel le cadre porteur (52) de l'outil d'installation (50) comprend une ou plusieurs agrafes de support activables (60) maintenant les brides de verrouillage (28), avant qu'elles ne soient attachées aux arbres (18).

9. Outil d'installation (50) selon la revendication 7, dans lequel les vérins hydrauliques (56) sont montés sur une plaque de support inférieure (58) du cadre porteur (52), ladite plaque de support (58) présentant deux cavités en forme de U (62) pouvant être logées dans une fente circonférentielle (36) au niveau d'une partie inférieure de chaque arbre (18) de l'unité de surveillance de charge de chaîne (10), lorsque l'outil d'installation (50) et l'unité de surveillance de charge de chaîne (10) sont montés ensemble.

10. Outil d'installation (50) selon les revendications 8 et 9, dans lequel chaque agrafe de support (60) est placée au-dessus de la plaque de support (58).

11. Outil d'installation (50) selon la revendication 7, dans lequel l'outil d'installation (50) est détachable de l'unité de surveillance de charge de chaîne (10).

12. Outil d'installation (50) selon la revendication 7, dans lequel une partie supérieure du cadre porteur (52) est agencée pour venir en butée contre le premier cliquet de verrouillage (14).

13. Outil d'installation (50) selon la revendication 7, comprenant un contrepoids (54), ledit contrepoids (54) étant monté en pivotement sur et s'étendant à partir du cadre porteur (52), et est un contrepoids pour l'unité de surveillance de charge de chaîne (10) lorsqu'elle est montée dans l'outil d'installation (50).

14. Procédé d'installation d'une unité de surveillance de charge de chaîne (10) selon l'une quelconque des revendications 1 à 6 sur une chaîne (40) en utilisant un outil d'installation (50) selon l'une quelconque des revendications 7 à 13, comprenant les étapes consistant à :
- monter l'unité de surveillance de charge de chaîne (10) dans un outil d'installation (50),
- descendre l'outil d'installation (50) avec l'unité de surveillance de charge de chaîne (10) dans la mer et à proximité de la chaîne (40),
- attacher l'outil d'installation (50) et l'unité de surveillance de charge de chaîne (10) sur la chaîne (40), dans lequel un premier cliquet de verrouillage (14) et un deuxième cliquet de verrouillage (16) de l'unité de surveillance de charge de chaîne (10) reçoivent et maintiennent des maillons de chaîne respectifs de la chaîne (40),
- activer l'outil d'installation (50) pour pousser le deuxième cliquet de verrouillage (16) de l'unité de surveillance de charge de chaîne (10 vers le haut,
- attacher des brides de verrouillage (28) sur chaque arbre (18) de l'unité de tension d'arrêt de chaîne de surveillance de charge (10) sous le deuxième cliquet de verrouillage (16), empêchant un mouvement vers le bas du deuxième cliquet de verrouillage (16),
- désactiver l'outil d'installation (50) de la poussée du deuxième cliquet de verrouillage (16) vers le haut, et
- retirer l'outil d'installation (50) de l'unité de surveillance de charge de chaîne (10).

15. Procédé selon la revendication 14, dans lequel l'activation et la désactivation de l'outil d'installation (50) comprennent l'activation et la désactivation de vérins hydrauliques (56) montés sur l'outil d'installation (50).

16. Procédé selon la revendication 14, dans lequel les brides de verrouillage (28) sont attachées entre le deuxième cliquet de verrouillage (16) et un premier support de bride (32) sur une partie inférieure de chaque arbre (18) de l'unité de surveillance de charge de chaîne (10).

17. Système de riser hybride, comprenant un riser immergé (70), qui, dans une partie supérieure, est connecté à une chaîne d'ancrage (40), ladite chaîne d'ancrage (40) d'étendant jusqu'à un réservoir de flottaison (72) flottant sous une surface de l'eau (76), une unité de surveillance de charge de chaîne (10) selon l'une quelconque des revendications 1 à 6 étant montée dans la chaîne d'ancrage (40) pour absorber la charge de la chaîne (40) et pour surveiller la charge en temps réel.

18. Système de riser hybride selon la revendication 17, dans lequel les données de tension relevées dans l'unité de surveillance de charge de chaîne (10) sont transférées à un système de surveillance de charge (80) en surface.
